# EUROPEAN PATENT SPECIFICATION

(11) **EP 2 974 586 B1**
(45) Date of publication and mention of the grant of the patent: **13.09.2017**
(21) Application number: 15175380.3
(22) Date of filing: 06.07.2015
(51) Int. Cl.: A01D 34/416

(54) **CUTTING HEAD FOR BRUSH CUTTERS**
SCHNEIDEKOPF FÜR GESTRÜPPSCHNEIDER
TÊTE DE COUPE POUR DÉBROUSSAILLEUSES

(30) Priority: 15.07.2014 IT MO20140205
(43) Date of publication of application: 20.01.2016
(73) Proprietor: Tecomec S.r.l., 42124 Reggio Emilia (IT)
(72) Inventor: Cigarini, Enrico, 42123 Reggio Emilia (IT)
(74) Representative: Gagliardelli, Fabrizio

(56) References cited:
- US-A- 4 190 954
- US-A- 5 836 227
- US-A- 5 979 064
- US-A- 6 108 914
- US-A1- 2008 053 052
- US-A1- 2012 260 508

## Description

The present invention relates to a cutting head for brush cutters.

There are known many types of cutting heads which can be removably mounted onto the rotating shaft of brush cutter, and which exhibit permanent plastic cutting wires protruding outwards of the cutting head, relative to the side periphery thereof.

By setting the cutting head in rotation, the cutting wires allow mowing of grass and bushes.

A cutting head of the known type comprises a central main body conformed as a circular plate and provided for receiving a plurality of cutting wires.

To said main body, at least a second closing body can be coupled, which is generally a plate-like closing body, so that the cutting head can be defined in its entirety.

At a first side thereof, the main body is provided with a plurality of protruding shaped elements being angularly spaced one from another along a circumference, and predisposed for securing the cutting wires.

The assembly of the cutting wires onto the main body is performed by cranking each wire, and by placing the latter in abutment with three shaped elements, one of which is placed in contact with the inner corner of the bend, i.e. at the apex of its concavity, whereas the two consecutive elements are put in contact with the cutting wire on the convex side thereof.

By coupling the main body to said closing body after the cutting wires having been mounted onto the main body, a whole cutting head is obtained, wherefrom a plurality of cutting flails protrude which are radially disposed.

Due to encumbrance reasons and to the fact that the wire must be firmly secured to the cutting head and particularly to the main body, the minimum angular distance allowed between the shaped elements is strictly limited, which in turn limits the number of wires that can be mounted in the cutting head.

Four wires are usually mounted in the cutting head, thereby defining eight cutting flails projecting laterally.

Further, the men skilled in the art feel the need of a more solid anchoring of the cutting wires to the head for the purposes of a more efficient and comfortable use.

US2012/260508 discloses a trimmer head for cutting vegetation comprising a bottom plate and a top plate, urged together so as to locking blades in place.

Also, the trimmer head comprises a plurality of connectors for securely connecting a plurality of fasteners, such as screws, bolts, clips and the like, in the plurality of fastening holes.

The task of the invention herein is to overcome the drawbacks of the prior art by making available a cutting head for brush cutters realized according to claim 1.

Further characteristics and advantages of the present invention will become more apparent from the indicative and therefore non-limiting description of a preferred but non-exclusive embodiment of a cutting head for brush cutters according to the invention, as illustrated in the accompanying drawings wherein:

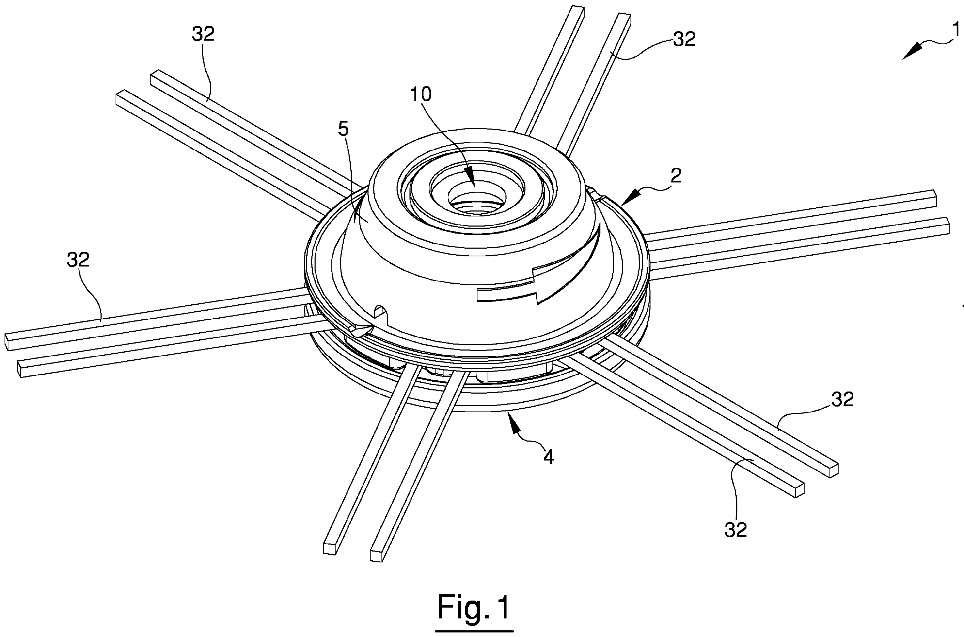

- Figure 1 is an axonometric view of the cutting head according to the invention;
- Figure 2 is an axonometric exploded view of the cutting head of Figure 1;
- Figure 3 is an exploded view of two main components of the cutting head from a reversed point of view as compared with the preceding figure;
- Figure 4 is an enlarged view of the particular K of the preceding figure; and
- Figure 5 is a sectional view of the cutting head;

Referring to the attached figures, by 1 it is generically indicated the cutting head of the invention.

The cutting head 1 was devised for being coupled to a rotating shaft of an brush cutter relative to a central coupling 10 thereof.

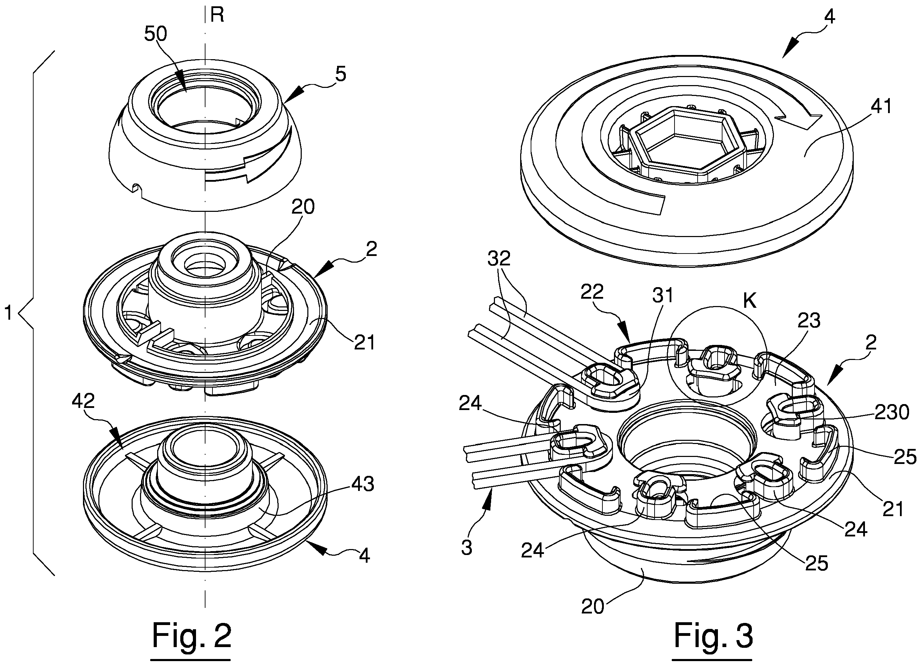

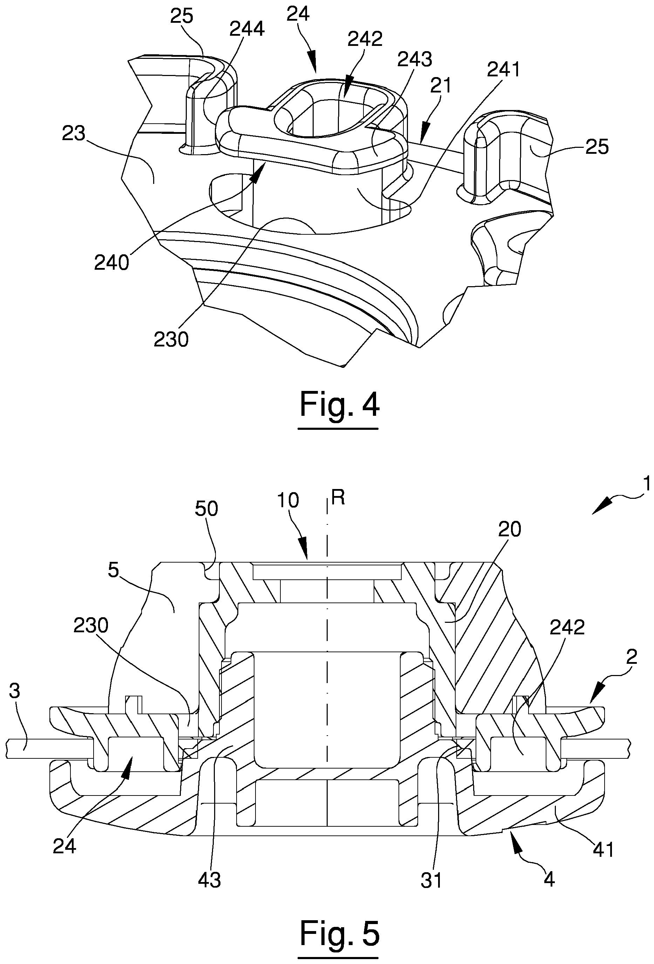

Due to the fact that the cutting head 1 is fitted onto the shaft then, upon the rotational activation of the latter, the cutting head 1 rotates with respect to a central axis R, relative to which said cutting head 1 is also substantially symmetrical (see Figures 2 and 5).

The proposed cutting head 1 primarily comprises a main body 2, preferably made of aluminum, intended for anchoring the cutting wires 3, which main body 2 is preferably sandwiched between a lower body 4, defining a lower knob, and an upper body 5 defining a top knob in a manner explained hereinafter.

In the preferred embodiment, the main body 2 comprises a central portion 20 adapted to be fitted onto the shaft of the brush cutter, for example by means of a threaded coupling, around which central portion 20 a plate-like annular flange 21 is formed, the periphery of which can be circumferential.

Such flange 21 is provided with an anchoring side 22 exhibiting a flat annular surface 23, wherefrom a plurality of first shaped elements 24 protrudes, which are angularly spaced apart from one another and preferably form a unitary body with said flange 21.

Said first elements 24 may be arranged along a circumference, which is coaxial with the rotational axis R of the cutting head 1 (and thus, in use, with the rotational axis R of said shaft), and be mutually equidistant; by way of example, six first elements 24 may be present (see Figure 3). According to an important aspect of the invention, each first element 24 is provided with a hooking member 240 which is so spaced from said surface 23, as to define a retaining seat for receiving a cutting wire 3.

In detail, the hooking member 240 can be fashioned at the free top end of the first element 24, so that a space is defined between the latter and the flat surface 23 of the flange 21 which space forms a sort of recess, wherein the wire 3 may be inserted and thus hooked.

Preferably, the distance between the bottom of each first element 24, which is placed relative to the surface 23 of the flange 21, and the hooking member 240, is such that the cutting wire 3 can be received with interference.

In other words, according to a preferential embodiment, each hooking member comprises a plate 240, or small "roof-shaped piece", protruding in a cantilever fashion inwards the main body 2, i.e. towards aforementioned axis R which is symmetrical to the flange 21, thereby locating a respective retaining seat facing towards the inside of the flange 21 and, therefore, of the cutting head 1.

Even more in detail, each first element 24 may be formed by a stem 241 (see Figure 4), which may optionally have an axial weight-reducing recess 242, which stem originates directly from the surface 23 of the flange 21 and terminates at the top thereof, thereby conforming the cantilevered plate 240.

Optionally, a small abutment tooth can be located at the lower surface of the hooking member 240, which abutment tooth is suitable for retaining in position the cutting wire 3 inserted within the respective seat.

The plate 240 as above described, may conveniently conform two flaps 243, 244 protruding laterally with respect to the rest of the first element 24. In this case, the plates 240 preferably have a greater dimension in a direction transverse to the diameter of the flange 21 passing through the corresponding first elements 24.

Furthermore, in the preferred embodiment shown in the attached figures, the surface 23 of the flange 21 is provided, relative to each seat, with a shaped hole 230, so as to accommodate the cutting wire 3 which is thus housed within the seat itself.

In other words, at the bottom or base of the cited stem 241 of each first element 24, a hole 230 can be obtained which is shaped along the flat surface 23 of the flange 21, and faces the lower surface of the plate 240, which hole 230 can receive a side portion of the cutting wire 3 hooked within relevant retaining seat.

Optionally, the hole 230 may have a shaped profile, similar or equal to that of the plate 240.

Prior to describing further construction details pertaining to the invention, the function of the first elements 24 is herein briefly described, as well as that of the retaining seats thereby defined; thus operation of the entire cutting head 1 is described in a later section.

In practice, the main body 2 of the disclosed cutting head 1, comprises a plurality of retaining seats, facing towards the rotational axis R of the cutting head 1 thereof, into which retaining seats, U- bent portions 31 of the cutting wire 3 may be inserted, thereby defining two cutting flails 32 extending outwards and protruding outside the body 2 with a length which is sufficient for bushes mowing.

Each bent portion 31 is to be inserted into the seat, wherein it will be retained on the top thereof by said hooking member 240, whereas at the bottom thereof it will be received into said shaped hole 230.

Furthermore, since the plate 240 of the hooking member 240 conforms two fins 243, 244, then the anchoring action does not occur solely at the midpoint or apex of the U-bent cutting wire 3, but it also takes place along the lateral sections of the portion 31 which is bent at an angular extension, substantially equal to one hundred and eighty degrees.

In practice, hooking of the cutting wire 3 based on a narrower bending of substantially one hundred and eighty degrees can be performed, with the advantage that a greater number of cutting wires 3 can be housed within the same cutting head 1; this is due to the fact that the first shaped elements 24 were supplied with the hooking members 240 as well as with further features as described above, forming a preferred configuration thereof.

Indeed in the embodiment illustrated in the figures, the cutting head 1 herein described can house even six cutting wires 3 for a total amount of twelve cutting flails 32; it is not to be excluded the possibility of increasing the number of the first elements 24 formed within the main body 2, so as to accommodate a greater number of cutting wires 3.

In order to maintain this one hundred and eighty degrees bending 31, and to enable the cutting flails 32 defined by said bending 31 to remain substantially parallel one to another, the invention preferably provides a plurality of shaped second elements 25 protruding from aforementioned flat surface 23 of the main body 2, said second elements 25 being angularly interposed with respect to the first elements 24.

In practice, the angle which identifies the distance between two first elements 24 with respect to the rotational axis R, is bisected by a straight line whereon a second element 25 lies.

Another way to explain it, is that the second elements 25 are interleaved with the first elements 24 with respect to their angular coordinates about the symmetrical axis R.

The mutual distance between two consecutive second elements 25 is chosen such that a lateral containment and addressing passage can be defined for each cutting wire 3 hooked to the associated seat, so that the cutting flails 32 thereof can be maintained substantially parallel to one another.

Preferably, the first and second elements 25 are arranged on respective concentric distinct circumferences, where the second elements 25 are arranged on the circumference having a greater diameter, so as to go to strike onto the cutting flails 32 branching out from relevant first element 24 where the cutting wire 3 is firmly hooked.

In the preferred embodiment shown in the figures, the second elements have a C-shaped or paperclip-like conformation, with concavity thereof facing towards the rotational axis R.

The inventive cutting head 1 further provides a further possible arrangement for retaining the cutting wires 3 which are anchored to their seats, which arrangement will become more apparent after explaining how replacement of the worn out cutting wires 3 occurs.

When the cutting flails 32 become worn out and thus unusable for the purposes of vegetation cutting, the cutting head 1 is disassembled from the rotating shaft of the brush cutter by the user.

Then the user removes the lower knob 4 by unscrewing it from the main body.

Such lower knob is defined by a closing body 4, for example of the metal type, supplied with an outer plate-like and circular base 41 and further provided with an inner side 42 opposite to that base (see Figures 2, 3 and 5).

The inner side 42 of the lower knob 4, in use, goes to strike onto aforementioned anchoring side 22 of the main body 2, i.e. it abuts against the flange 21, and moves away therefrom during the unscrewing step.

The threaded coupling between the main body 2 and the closing body 4 can occur relative to the center of the two bodies 2 and 4, both of which are axisymmetric.

After separating the two bodies 2, 4, the user unseats all cutting wires 3 from the retaining seat thereof for replacement with new ones.

Thereafter, the closing body 4 is re-tightened onto the main body 2, until the above-mentioned inner side 42 of the latter goes to strike onto the annular flange 21 of the main body 2, wherein the cutting wires 3 are hooked. According to the invention, the inner side of the lower body 4 comprises an interfering element 43, suitable for pressing the cutting wires 3 located within the respective seats as a result of the coupling due to screwing onto the main body 2.

In detail, this interfering element includes a protruding and substantially annular abutment portion 43 of such a size that, following coupling of the closing body with the main body 2, it comes to be arranged facing said seats so as to press the U-bent portion 31.

In practice, each cutting wire 3 inserted within the seat, exhibits a U-shaped bending 31 comprising a section which protrudes over the seat itself, towards the center of the cutting head 1, that is, towards the repeatedly mentioned rotational axis R.

This protruding part is pressed by the annular abutment portion 43 of the closing body 4, which abutment portion 43 can press the cutting wire 3 against the flat surface 23 of the flange 21 after complete screwing of the closing body 4, due to the fact that it is defined within a circumference with diameter less than the one of the first elements 24.

Thus, the cutting wires 3 are sandwiched between the main body 2 and the closing body 4, thereby defining an even firmer securing.

Once the cutting head 1 is secured by screwing the lower knob 4 onto the main body 2, there will be provided a cutting head 1 from which side periphery a plurality of cutting flails 32 pairs protrude, which are distributed along the circumference of said cutting head 1.

As mentioned above, opposite to the closing body 4, there can be provided an annular upper body 5 to be screwed onto the main body 2, thereby defining an upper knob provided with a passing through hole 50 for housing the coupling seat 10 coupling the main body 2 to the rotating shaft of the brush cutter.

## Claims

1. A cutting head (1) for brush cutters, comprising a main body (2) to be coupled with a rotating shaft of a brush cutter and equipped with a first surface (23) wherefrom a plurality of first shaped elements (24) protrudes, wherein each first element (24) is provided with a hooking member (240), distanced from said surface (23), defining a retaining seat for receiving a cutting wire (3); the head (1) being **characterized in that** it comprises a closing body (4) adapted to be coupled in a releasable manner to said main body (2), at said flat surface (23); wherein said closing body (4) comprises an inner side (42) intended to abut said surface (23) of the main body (2), which inner side (42) comprises an interfering element (43) adapted to press the cutting wires (3) inserted within the respective seats against said surface (23), following the coupling of the closing body (4) with the main body (2); and wherein said interfering element comprises a substantially annular abutment portion (43) of dimensions such that, following the coupling of the closing body (4) with the main body (2), such abutment portion (43) is arranged opposite said seats, thereby allowing pressing of a protruding part of the cutting wires (3) which are received into the retaining seats.

2. The head (1) according to the preceding claim, wherein said hooking member comprises a plate (240) that projects in a cantilever fashion towards the inside of the main body (2), thereby locating, for each first element (24), a retaining seat facing inwards.

3. The head (1) according to at least one of claims 1 or 2, wherein each hooking member (240) conforms two tabs (243, 244) that project laterally with respect to the rest of the first element (24).

4. The head (1) according to at least any preceding claim, wherein, at each seat, said surface (23) is provided with a hole (230) that can house the cutting wire (3) received in the seat.

5. The head (1) according to at least any preceding claim, wherein each hooking member (240) includes an abutment tooth adapted to hold a cutting wire (3) in position, when inserted into respective seat.

6. The head (1) according to at least any preceding claim, wherein the first elements (24) are equally spaced one from another.

7. The head (1) according to at least any preceding claim, comprising a plurality of second shaped elements (25) projecting from the mentioned surface (23) of the main body (2), said second elements (25) being angularly interposed to the first elements (24).

8. The head (1) according to the preceding claim, wherein said first and second elements (24, 25) are arranged on respective concentric circumferences, the second elements (25) being arranged on the circumference with the largest diameter.

## Patentansprüche

1. Schneidekopf (1) für Gestrüppschneider, umfassend einen Hauptkörper (2), der mit einer Rotationswelle eines Gestrüppschneiders zu kuppeln ist, und ausgestattet mit einer ersten Oberfläche (23), aus der eine Vielzahl an ersten geformten Elementen (24) hervorsteht, wobei ein jedes erste Element (24) mit einem Hakenelement (240) versehen ist, beabstandet von der Oberfläche (23), definierend einen Haltesitz für die Aufnahme eines Schneidedrahts (3), wobei der Kopf (1) **dadurch gekennzeichnet ist, dass** er einen Verschlusskörper (4) umfasst, der ausgelegt ist, um auf lösbare Weise mit dem Hauptkörper (2) an der flachen Oberfläche (23) gekuppelt zu werden, wobei der Verschlusskörper (4) eine Innenseite (42) umfasst, die dazu bestimmt ist, an die Oberfläche (23) des Hauptkörpers (2) anzuschlagen, wobei die Innenseite (42) ein interferierendes Element (43) umfasst, das ausgelegt ist, um die Schneidedrähte (3), die in die jeweiligen Sitze eingesetzt sind, gegen die Oberfläche (23) zu pressen, und zwar nach dem Kuppeln des Verschlusskörpers (4) mit dem Hauptkörper (2), und wobei das interferierende Element einen im Wesentlichen ringförmigen Anschlagsabschnitt (43) umfasst, dessen Abmessungen so bemessen sind, dass der Anschlagsabschnitt (43) nach dem Kuppeln des Verschlusskörpers (4) mit dem Hauptkörper (2) gegenständig zu den Sitzen angeordnet ist, was das Pressen eines hervorstehenden Teils der Schneidedrähte (3) erlaubt, die in den Haltesitzen aufgenommen werden.

2. Kopf (1) nach dem vorhergehenden Anspruch, wobei das Hakenelement eine Platte (240) umfasst, die auskragend zur Innenseite hin des Hauptkörpers (2) hervorsteht, wodurch für jedes erste Element (24) ein Haltesitz nach innen gewandt angeordnet wird.

3. Kopf (1) nach mindestens einem der Ansprüche 1 oder 2, wobei ein jedes Hakenelement (240) zwei Laschen (243, 244) ausbildet, die seitlich zum Rest des ersten Elements (24) hervorstehen.

4. Kopf (1) nach mindestens einem der vorhergehenden Ansprüche, wobei die Oberfläche (23) an einem jeden Sitz mit einem Loch (230) versehen ist, das den im Sitz aufgenommenen Schneidedraht (3) unterbringen kann.

5. Kopf (1) nach mindestens einem der vorhergehenden Ansprüche, wobei ein jedes Hakenelement (240) einen Anschlagszahn einschließt, der ausgelegt ist, um einen Schneidedraht (3) in Position zu halten, wenn dieser in den jeweiligen Sitz eingefügt ist.

6. Kopf (1) nach mindestens einem der vorhergehenden Ansprüche, wobei die ersten Elemente (24) voneinander gleich beabstandet sind.

7. Kopf (1) nach mindestens einem der vorhergehenden Ansprüche, umfassend eine Vielzahl an zweiten geformten Elementen (25), die aus der genannten Oberfläche (23) des Hauptkörpers (2) hervorstehen, wobei die zweiten Elemente (25) winkelig zu den ersten Elementen (24) eingesetzt sind.

8. Kopf (1) nach dem vorhergehenden Anspruch, wobei die ersten und zweiten Elemente (24, 25) auf jeweiligen konzentrischen Umfängen angeordnet sind, wobei die zweiten Elemente (25) auf dem Umfang mit dem größten Durchmesser angeordnet sind.

## Revendications

1. Tête de coupe (1) pour débroussailleuses, comprenant un corps principal (2) à accoupler à un arbre rotatif d'une débroussailleuse et équipé d'une première surface (23) de laquelle dépasse une pluralité de premiers éléments façonnés (24), dans laquelle chaque premier élément (24) est pourvu d'un organe d'accrochage (240), espacé de ladite surface (23), définissant un siège de retenue pour recevoir un fil coupant (3) ; la tête (1) étant **caractérisée en ce qu'**elle comprend un corps de fermeture (4) pouvant être accouplé d'une manière amovible au dit corps principal (2) en correspondance de ladite surface plate (23) ; dans laquelle ledit corps de fermeture (4) comprend un côté interne (42) prévu pour se mettre en butée contre ladite surface (23) du corps principal (2), ledit côté intérieur (42) comprend un élément d'interférence (43) pouvant presser les fils coupants (3), insérés à l'intérieur des sièges respectifs, contre ladite surface (23) suite à l'accouplement du corps de fermeture (4) avec le corps principal (2) ; et dans laquelle ledit élément d'interférence comprend une partie de butée substantiellement annulaire (43) aux dimensions telles que, suite à l'accouplement du corps de fermeture (4) au corps principal (2), cette partie de butée (43) est disposée à l'opposé desdits sièges, permettant ainsi le pressage d'une partie en saillie des fils coupants (3) étant reçus dans les sièges de retenue.

2. Tête (1) selon la revendication précédente, dans laquelle ledit organe d'accrochage comprend une plaque (240) dépassant en porte-à-faux vers l'intérieur du corps principal (2), positionnant ainsi, pour chaque premier élément (24), un siège de retenue orienté vers l'intérieur.

3. Tête (1) selon au moins l'une des revendications 1 ou 2, dans laquelle chaque organe d'accrochage (240) conforme deux languettes (243, 244) qui dépassent latéralement par rapport au reste du premier élément (24).

4. Tête (1) selon au moins l'une quelconque des revendications précédentes, dans laquelle, en correspondance de chaque siège, ladite surface (23) est pourvue d'un orifice (230) pouvant loger le fil coupant (3) reçu dans le siège.

5. Tête (1) selon au moins l'une quelconque des revendications précédentes, dans laquelle chaque organe d'accrochage (240) inclut une dent de butée pouvant tenir un fil coupant (3) en position lorsqu'il est inséré dans un siège respectif.

6. Tête (1) selon au moins l'une quelconque des revendications précédentes, dans laquelle les premiers éléments (24) sont équidistants les uns par rapport aux autres.

7. Tête (1) selon au moins l'une quelconque des revendications précédentes, comprenant une pluralité de seconds éléments façonnés (25) dépassant de la surface mentionnée (23) du corps principal (2), lesdits seconds éléments (25) étant interposés angulairement par rapport aux premiers éléments (24).

8. Tête (1) selon la revendication précédente, dans laquelle lesdits premier et second éléments (24, 25) sont disposés sur des circonférences concentriques respectives, les seconds éléments (25) étant disposés sur la circonférence avec le diamètre plus grand.
